# EUROPEAN PATENT APPLICATION

(11) **EP 3 584 747 A1**
(43) Date of publication of application: **25.12.2019**
(21) Application number: 19181202.3
(22) Date of filing: 19.06.2019
(51) Int. Cl.: G06K 9/00, G06Q 10/08

(54) **IMAGE PROCESSING APPARATUS**

(30) Priority: 19.06.2018 JP 2018116156
(71) Applicant: Toshiba Tec Kabushiki Kaisha, Shinagawa-ku Tokyo 141-8562 (JP)
(72) Inventor: YAMAZAKI, Keita, Shinagawa-ku, Tokyo 141-8562 (JP); YASUNAGA, Masaaki, Shinagawa-ku, Tokyo 141-8562 (JP)
(74) Representative: Bandpay & Greuter

(57) **Abstract**

According to an embodiment, an image processing apparatus includes an interface, a memory, and a processor. The interface acquires a photographed image from a camera that photographs a photographing region including a disposition position where an article is disposed. The memory stores, as a preservation image, a photographed image photographed by the camera in a state in which the photographing region does not include a person. The processor estimates fluctuation of the article based on article recognition processing for an image of a differential region between a photographed image photographed by the camera after the person detected in the photographing region is no longer detected in the photographing region and the preservation image stored by the memory.

## Description

### FIELD

The present invention relates to image processing technologies in general, and embodiments described herein relate in particular to an image processing apparatus, an inventory monitoring system, and methods related thereto.

### BACKGROUND

There has been a technique for monitoring shortages, stockouts, and the like of commodities in a store with images photographed by a camera. For example, there is related art for removing a moving object such as a person from a photographed image photographed by a camera in every unit time and detecting insufficiency of commodities according to differences among a plurality of photographed images from which the moving object is removed.

However, in the related art, it cannot be determined which person causes fluctuation of which commodity. In the related art, shortages and stockouts of commodities cannot be detected in the unit time, which is an interval at which the camera photographs an image.

Related art is described in, for example, JP-A-2017-162375.

To solve such problems, there is provided an image processing apparatus, comprising:
an interface configured to acquire a photographed image from a camera that photographs a photographing region including a disposition position where an article is disposed;
a memory configured to store, as a preservation image, the photographed image photographed by the camera in a state in which the photographing region does not include a person; and
a processor configured to estimate fluctuation of the article based on article recognition processing for an image of a differential region between a photographed image photographed by the camera after the person detected in the photographing region is no longer detected in the photographing region and the preservation image stored by the memory.

Preferred embodiments are defined in claims 2 to 7.

In particular, the processor may estimate at least one of an age and a gender of the person detected in the photographing region.

The invention further relates to an image processing method, comprising:
acquiring a photographed image from a camera that photographs a photographing region including a disposition position where an article is disposed;
storing, as a preservation image, the photographed image photographed by the camera in a state in which the photographing region does not include a person; and
estimating fluctuation of the article based on article recognition processing for an image of a differential region between a photographed image photographed by the camera after the person detected in the photographing region is no longer detected in the photographing region and the preservation image stored.

Preferred embodiments are defined in claims 9 to 14.

In particular, the method may further comprise:
estimating at least one of an age and a gender of the person detected in the photographing region.

The invention also concerns an inventory monitoring system, comprising:
the image processing apparatus as defined above; and
a threshold number of the articles.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram schematically illustrating a configuration example of a monitoring system including an image processing apparatus according to a first embodiment;
FIG. 2 is a block diagram illustrating a configuration example of a control system in the image processing apparatus;
FIG. 3 is a flowchart for explaining an operation example in the image processing apparatus;
FIG. 4 is a diagram schematically illustrating a configuration example of a monitoring system including an image processing apparatus according to a second embodiment;
FIG. 5 is a block diagram illustrating a configuration example of a control system in the image processing apparatus;
FIG. 6 is a flowchart for explaining an operation example in the image processing apparatus;
FIG. 7 is a diagram schematically illustrating a configuration example of a monitoring system including an image processing apparatus according to a third embodiment;
FIG. 8 is a block diagram illustrating a configuration example of a control system in the image processing apparatus; and
FIG. 9 is a flowchart for explaining an operation example in the image processing apparatus.

### DETAILED DESCRIPTION

An object of embodiments is to provide an image processing apparatus that can estimate which person causes fluctuation of an article.

According to an embodiment, an image processing apparatus includes an interface, a memory, and a processor. The interface acquires a photographed image from a camera that photographs a photographing region including a disposition position where an article is disposed. The memory stores, as a preservation image, a photographed image photographed by the camera in a state in which the photographing region does not include a person. The processor estimates fluctuation of the article based on article recognition processing for an image of a differential region between a photographed image photographed by the camera after the person detected in the photographing region is no longer detected in the photographing region and the preservation image stored by the memory.

Embodiments are explained below with reference to the drawings.

An image processing apparatus according to an embodiment is used in a monitoring system that monitors a state of an article (a commodity) based on an image photographed by a camera. The image processing apparatus detects a person in a photographing region of the camera and detects a state (fluctuation) of the article such as a shortage, a stockout, or the like from a difference between photographed images before and after the person is detected.

Monitoring systems including image processing apparatuses are explained below as first, second, and third embodiments. In the first to third embodiments explained below, monitoring systems assumed to monitor states of articles, which are commodities, displayed in shelves (disposition positions) in a store such as a retail store are explained. In the first to third embodiments, it is assumed that a customer and a store clerk are present as persons who cause an article A in the store to fluctuate.

### (First Embodiment)

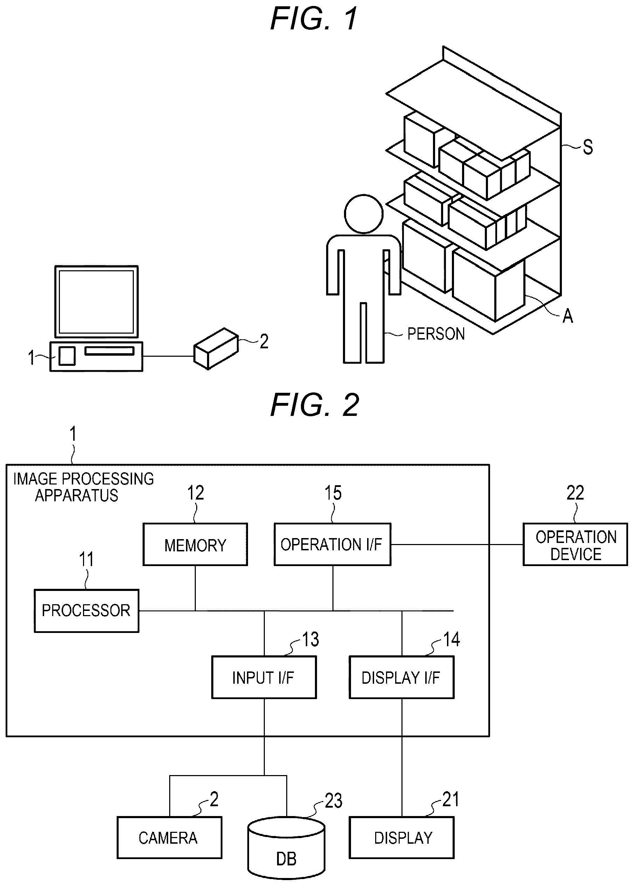

FIG. 1 is a diagram for schematically explaining a monitoring system including an image processing apparatus 1 according to a first embodiment.

As illustrated in FIG. 1, the monitoring system includes an image processing apparatus 1 and a camera 2 connected to the image processing apparatus 1. The image processing apparatus 1 acquires a photographed image photographed by the camera 2. The image processing apparatus 1 has a function of instructing the camera 2 to, for example, photograph an image. The camera 2 is set such that a photographing region of the camera 2 is a shelf S in which an article A is disposed.

In the first embodiment, it is assumed that the camera 2 is set to face the shelf S in which the article A is disposed. The shelf S is set in a disposition position of the article A and in a region (a store) where a person moves. The camera 2 is set to be able to also photograph a person appearing in a place where the person can pick up the article A disposed in the shelf S (a person accessible to the article A). Persons photographed by the camera 2 together with the shelf S include an administrator (e.g., a store clerk) who manages the article A disposed in the shelf S and a user (e.g., a customer visiting the store) who picks up the article A.

The configuration of the image processing apparatus 1 according to the first embodiment is explained.

FIG. 2 is a block diagram illustrating a configuration example of a control system in the image processing apparatus 1 according to the first embodiment.

As illustrated in FIG. 2, the image processing apparatus 1 includes a processor 11, a memory 12, an input interface (I/F) 13, a display I/F 14, and an operation I/F 15.

The processor 11 executes various kinds of processing by executing computer programs. The memory 12 includes a volatile memory (a working memory) such as a RAM, a nonvolatile memory (a program memory) such as a ROM, and a rewritable nonvolatile memory (a data memory).

For example, the processor 11 executes computer programs stored in the memory 12 to realize processing explained below such as person detection processing, differential region detection processing, and article recognition processing. The memory 12 retains information such as a photographed image, information for person detection, and information for article specifying. The photographed image is an image photographed by the camera 2. The information for person detection is information for specifying a person from an image such as a threshold of a feature value for person detection included in the image. The information for article specifying is information for specifying an article from the image such as a local feature value included in the image.

The input I/F 13 is an interface for communicatively connecting the image processing apparatus 1 to the camera 2. The image processing apparatus 1 receives, via the input I/F 13, an input of a photographed image photographed by the camera 2. The display I/F 14 is an interface for communicatively connecting the image processing apparatus 1 to a display 21 that displays information. The operation I/F 15 is an interface for connecting the image processing apparatus 1 to an operation device 22 to which an operator inputs an operation instruction.

The I/Fs 13 to 15 may communicatively connect the image processing apparatus 1 by wire or may perform wireless communication. A database (DB) 23 provided in a storing section of the external device may be connected to the input I/F 13. The DB 23 may store information such as a photographed image, information for person detection, and information for article specifying.

The operation of the monitoring system including the image processing apparatus 1 according to the first embodiment is explained.

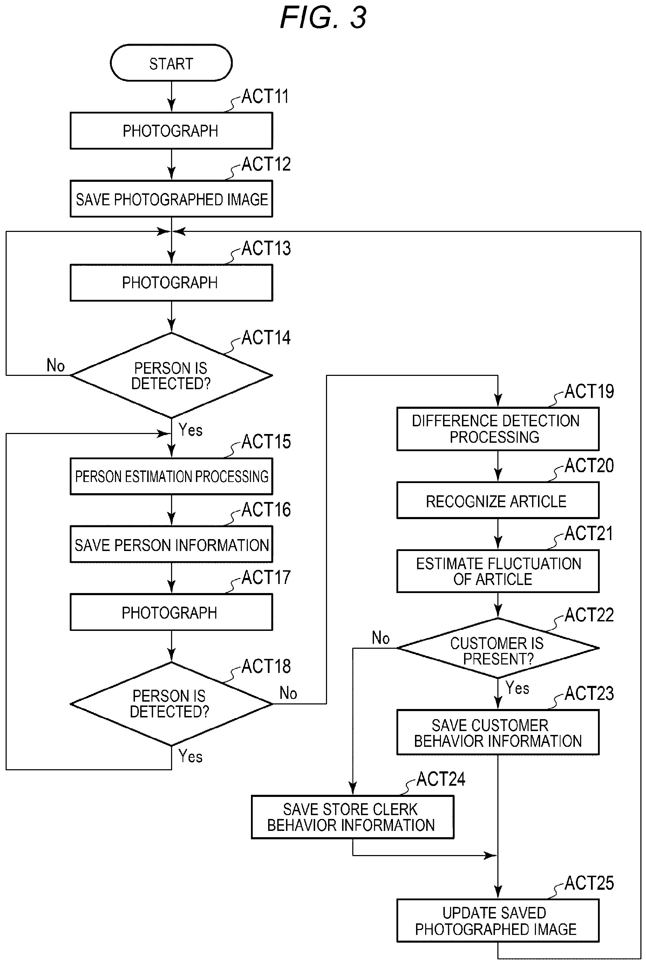

FIG. 3 is a flowchart for explaining an operation example of the image processing apparatus 1 according to the first embodiment.

First, the processor 11 of the image processing apparatus 1 photographs the shelf S with the camera 2 set in a position facing the shelf S (ACT 11). The camera 2 photographs a photographing region including the shelf S serving as a region where articles, which are objects set as monitoring targets of shortages, stockouts, and the like, are set. In ACT 11, the processor 11 acquires, from the camera 2, a photographed image photographed in a state in which a person is absent in the photographing region including the shelf S.

If the person is present in the photographing region of the camera 2, the photographing by the camera 2 may be executed again after the person is no longer present in the photographing region. After an image is photographed in ACT 11, a photographing position of the camera 2 and the shelf S present in the photographing region are not moved. If the camera 2 or the shelf S is moved, the processor 11 of the image processing apparatus 1 may return to ACT 11 and execute the processing again.

After acquiring the photographed image from the camera 2, the processor 11 stores the acquired photographed image in the memory 12 as a photographed image for preservation (a preservation image) (ACT 12). In ACT 11, the camera 2 photographs the shelf S in a state in which the person is absent within a photographing range. Therefore, the preservation image stored in the memory 12 is an image obtained by photographing the photographing region including the shelf S in a state in which the person is absent (a photographed image before the person is detected).

After storing the preservation image in the memory 12, the processor 11 photographs, with the camera 2, an image for detecting the person (ACT 13). For example, the processor 11 performs the photographing by the camera 2 at a predetermined interval (a first interval) in order to detect the person within the photographing range of the camera 2. However, the photographing position of the camera 2 and the position of the shelf S are not moved.

The processor 11 detects the person from a photographed image photographed by the camera 2 at every predetermined interval (ACT 14). For example, the processor 11 detects the person from a photographed image photographed by the camera 2 using the information for person detection saved in the memory 12. Even if the whole body of the person is not photographed in the photographed image of the camera 2, the processor 11 may regard the person as being detected if a part of the body of the person such as a hand or a foot is photographed.

For example, as a method of person detection, a person detecting method such as linear separation of gradient information (HOG: Histogram of Gradients) can be used.

If the person is only detected, a sensor for person detection having the photographing range of the camera 2 as a detection region may be separately provided. With such a configuration, if the sensor for person detection detects the person, the processor 11 may photograph an image with the camera 2.

If the person is not detected from the photographed image of the camera 2 (NO in ACT 14), the processor 11 returns to ACT 13 and repeats the photographing by the camera 2. If the person is detected from the photographed image of the camera 2 (YES in ACT 14), the processor 11 performs person estimation processing for estimating person information of the detected person (ACT 15). For example, the processor 11 estimates whether the person detected by image processing for the photographed image is the customer or the store clerk. The processor 11 may estimate information such as age or sex of the detected person as person information. The person estimation processing can be realized by, for example, estimating the person information using linear separation of feature values.

After estimating the person information of the person detected from the photographed image, the processor 11 saves the person information (estimation information) estimated from the photographed image in the memory 12 (ACT 16). The processor 11 may save the photographed image together with the estimated person information. The photographed image saved together with the person information may be an entire photographed image in which the person is photographed or may be an image of a region detected as the person. The processor 11 may execute the person estimation processing later and save, as the person information, the photographed image or the image of the region detected as the person. However, the photographed image in which the person is detected (the image including the person) may not be saved considering privacy.

After detecting the person from the photographed image, the processor 11 repeatedly executes the photographing by the camera 2 until the person is no longer detected (ACT 17). For example, the processor 11 repeats the photographing by the camera 2 at a predetermined interval (a second interval) until the person once detected is no longer detected. After acquiring the photographed image photographed by the camera 2, the processor 11 executes person detection processing on the acquired photographed image (ACT 18).

If the person is continuously detected (YES in ACT 18), the processor 11 returns to ACT 15 and executes the person estimation processing. However, the processor 11 may omit, by tracking the person once detected, the processing in ACTS 15 and 16 for a person for whom the person estimation processing is already executed. That is, the processor 11 may execute the processing in ACTS 15 and 16 if another person is detected anew and may omit the processing in ACTS 15 and 16 in other cases.

If the person is no longer detected (NO in ACT 18), the processor 11 performs difference detection processing for detecting a difference between the photographed image (the photographed image after the person detection) and the preservation image (ACT 19). That is, the processor 11 acquires an image of a differential region (a differential image) between the preservation image serving as the photographed image before the person detection saved in the memory 12 and the photographed image after the person detection photographed by the camera 2. The processor 11 may acquire the image of the differential region using a method of, for example, acquiring a part where a pixel change in a pixel level is equal to or larger than a threshold.

After executing the difference detection processing, the processor 11 executes, on the image of the differential region between the preservation image and the photographed image, article recognition processing for recognizing an article (ACT 20). For example, the processor 11 performs the article recognition processing using the information for article specifying saved in the memory 12. The processor 11 can recognize, with the article recognition processing for the differential image, an article that fluctuates before and after the person detection.

After executing the article recognition processing, the processor 11 estimates fluctuation (a change in a disposition state) of the article in the shelf S based on a result of the article recognition for the image of the differential region (ACT 21). For example, the processor 11 may determine the fluctuation of the article with image processing for detecting a luminance change in an image region of the article in the shelf S, an area change of the image region of the article, and the like. The processor 11 can estimate a result of the person moving the article detected by the article recognition processing for the image of the differential region.

If the number of pieces of the article in the shelf S is smaller than a predetermined threshold, the processor 11 may display guidance for informing a shortage or the like on the display 21 through the display I/F 14. If an image of the differential region indicating fluctuation of the article is not obtained (if there is no change before and after the detection of the person), the processor 11 may omit the processing in ACTS 20 to 24.

After estimating the fluctuation of the article, the processor 11 confirms whether the customer is present among persons detected in a period in which the fluctuation of the article is estimated (ACT 22). The processor 11 determines whether the customer is present among the detected persons based on the person information estimated by the person estimation processing for the image in which the person is detected.

In the processing example explained above, the processor 11 estimates whether the person detected in the person estimation processing in ACT 15 is the customer or the store clerk and saves a result of the estimation in the memory 12. In this case, the processor 11 confirms whether the customer is present among the detected persons based on the result of the person estimation processing saved in the memory 12.

If the photographed image in which the person is detected (or an image region of the detected person) is saved in the memory 12, the processor 11 only has to estimate whether the person is the customer or the store clerk from the image saved by the memory 12. A method of estimating whether the person is the customer or the store clerk can be implemented by estimation processing using, for example, linear separation of feature values.

If the customer is present among the detected persons (YES in ACT 22), the processor 11 saves information indicating the estimated fluctuation of the article in the memory 12 as customer behavior information in association with the person information (ACT 23). That is, if the customer is detected, the processor 11 saves, in the memory 12, the customer behavior information in which the information indicating the fluctuation of the article estimated in ACT 21 and the person information estimated in ACT 15 are associated.

For example, if the customer is present among the detected persons and the number of pieces of an article in the shelf S decreases, the processor 11 can estimate that the customer takes away the article decreasing in the number of pieces. If the customer is present among the detected persons and the number of pieces of an article in the shelf S increases, the processor 11 can estimate, based on a predetermined article disposition plan, whether disposition of the article is correct. Results of these estimations may be saved in the memory 12 as the customer behavior information. The information saved in the memory 12 may be displayed on the display 21 or the like in a form viewable by a user through the display I/F 14.

If the customer is absent among the detected persons (NO in ACT 22), the processor 11 saves, as store clerk behavior information, information indicating the estimated fluctuation of the article in the memory 12 in association with the person information (ACT 23). That is, if the customer is not detected, the processor 11 estimates that the fluctuation of the article estimated in ACT 21 is fluctuation by the store clerk and saves, as the store clerk behavior information associated with the person information, information indicating the estimated fluctuation of the article in the memory 12.

For example, if the customer is absent among the detected persons and if the number of pieces of an article in the shelf S decreases, the processor 11 can estimate that the store clerk moves the article decreasing in the number of pieces. If the customer is absent among the detected persons and the number of pieces of an article in the shelf S increases, the processor 11 can estimate, based on the predetermined article disposition plan, whether disposition of the article moved by the store clerk is correct. Results of these estimations may be saved in the memory 12 as the store clerk behavior information. The information saved in the memory 12 may be displayed on the display 21 or the like in a form viewable by the user through the display I/F 14.

After saving the customer behavior information or the store clerk behavior information in the memory 12, the processor 11 updates the photographed image for preservation (the preservation image) stored in the memory 12 (ACT 25). The processor 11 replaces the preservation image saved in the memory 12 with a photographed image in a state in which the person is no longer detected. Consequently, the preservation image saved in the memory 12 before the person is detected is overwritten by the photographed image photographed by the camera 2 after the person detection. The processor 11 may store the photographed image after the person is no longer detected in the memory 12 as the latest preservation image without overwriting the photographed image on the preservation image saved in the memory 12. If the update of the preservation image ends, the processor 11 returns to ACT 13 and repeatedly executes the processing explained above.

As explained above, according to the first embodiment, it is possible to estimate who causes which article to fluctuate, which cannot be realized by flow line measurement and the like. It is possible to confirm, with the store clerk behavior information, that the store clerk causes the article to fluctuate. It is possible to confirm, with the customer behavior information, that the customer causes the article to fluctuate. For example, with the store clerk behavior information, it is possible to confirm whether article supply work or work for article advancing work is correctly carried out by a person in charge (the store clerk). With the customer behavior information, it is seen what kind of a customer tends to be interested in which commodity in a range that can be estimated by the person estimation processing. The customer behavior information can be used for optimization of article display.

With the customer behavior information obtained in the first embodiment explained above, it is possible to confirm, according to comparison of fluctuation in the number of pieces of the article by the customer and settlement information, whether normal transaction is carried out. The customer behavior information can be used for shoplifting prevention and the like. Further, with the customer behavior information, it is possible to detect, by recognizing a moved article with article recognition, that the customer returns the article to an inappropriate place. It is possible to output an alert.

### (Second Embodiment)

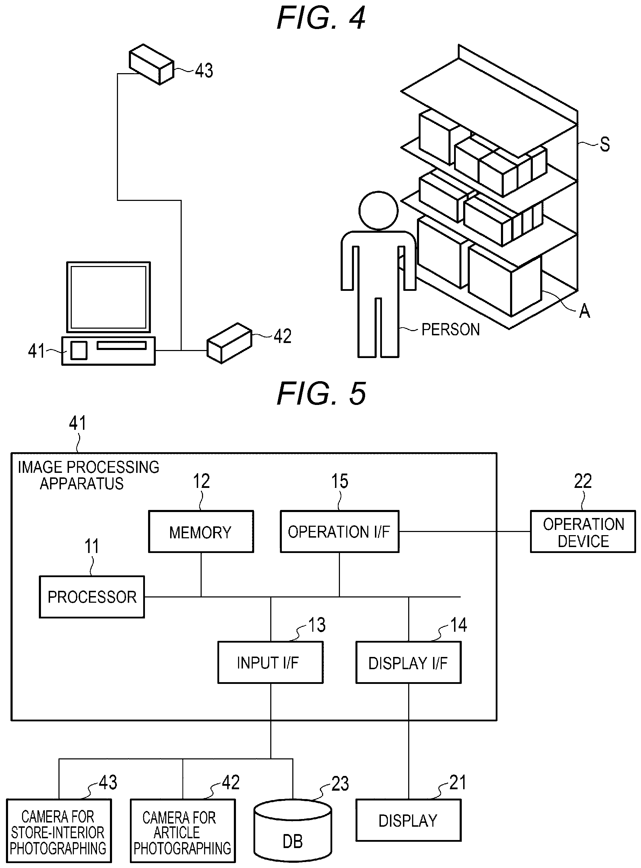

FIG. 4 is a diagram for schematically explaining a monitoring system including an image processing apparatus 41 according to a second embodiment.

As illustrated in FIG. 4, the monitoring system according to the second embodiment includes the image processing apparatus 41, a camera for article photographing (an article monitoring camera) 42, and a camera for store-interior photographing (a person monitoring camera) 43. The image processing apparatus 41 is communicatively connected to the camera for article photographing 42 and the camera for store-interior photographing 43.

The image processing apparatus 41 estimates fluctuation of an article from a photographed image photographed by the camera for article photographing 42. The image processing apparatus 41 detects a person from an image (a monitoring video) photographed by the camera for store-interior photographing 43. The image processing apparatus 41 has a function of performing person estimation processing for estimating person information of the person detected from the image photographed by the camera for store-interior photographing 43.

In the second embodiment, the camera for article photographing 42 is set such that a photographing range of the camera for article photographing 42 is the shelf S in which the article A is disposed. For example, the camera for article photographing 42 is set to face the shelf S in which the article A is disposed. The camera for store-interior photographing 43 is set to photograph the person present around the shelf S in which the article A is disposed. The camera for store-interior photographing 43 only has to be able to photograph the person present in a position where the person can touch the article A disposed in the shelf S. The camera for store-interior photographing 43 is set, for example, on a ceiling in a store. The camera for store-interior photographing 43 may be an existing monitoring camera set in the store in which the shelf S is set.

The configuration of the image processing apparatus 41 according to the second embodiment is explained.

FIG. 5 is a block diagram illustrating a configuration example of a control system in the image processing apparatus 41 according to the second embodiment.

As illustrated in FIG. 5, the image processing apparatus 41 according to the second embodiment has the same configuration as the image processing apparatus 1 illustrated in FIG. 2 explained in the first embodiment except that the camera for store-interior photographing 43 is connected to the image processing apparatus 41. Therefore, concerning components illustrated in FIG. 5, the same components as the components illustrated in FIG. 2 are denoted by the same reference numerals and signs and detailed explanation of the components is omitted.

That is, the image processing apparatus 41 according to the second embodiment is different from the configuration illustrated in FIG. 2 in that the camera for article photographing 42 and the camera for store-interior photographing 43 are connected to the input I/F 13. As explained above, a photographing region of the camera for article photographing 42 is set such that the camera for article photographing 42 can photograph the article A set in the shelf S. The camera for store-interior photographing 43 is disposed such that, for example, the photographing region includes a plurality of shelves set in the store and persons who pick up articles disposed in the shelves are within the photographing region.

An interface for connecting the camera for article photographing 42 and an interface for connecting the camera for store-interior photographing 43 may be respectively provided in the image processing apparatus 41. The processor 11 has a function of detecting the person from the image photographed by the camera for store-interior photographing 43 rather than the camera for article photographing 42 and a function of estimating person information of the detected person.

The operation of the monitoring system including the image processing apparatus 41 according to the second embodiment is explained.

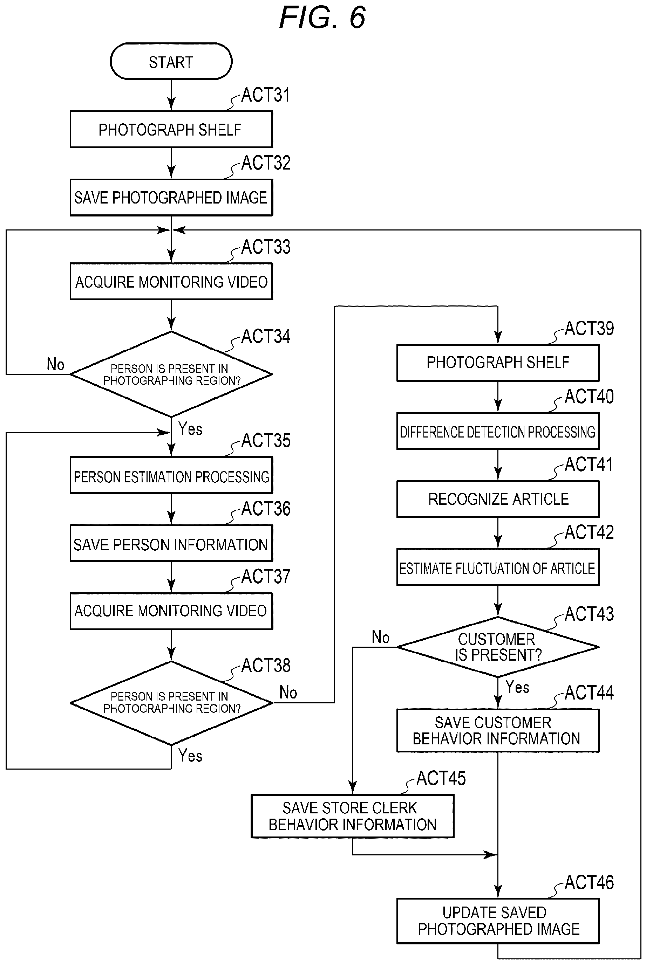

FIG. 6 is a flowchart for explaining an operation example of the image processing apparatus 41 according to the second embodiment.

First, the processor 11 of the image processing apparatus 41 photographs the photographing region including the shelf S with the camera for article photographing 42 set in a position facing the shelf S (ACT 31). In ACT 31, the processor 11 acquires a photographed image obtained by the camera for article photographing 42 photographing the photographing region including the shelf S in a state in which the person is absent.

If the person is present in the photographing region of the camera for article photographing 42, the processor 11 may perform the photographing again in the state in which the person is absent. After an image is photographed in ACT 31, the camera for article photographing 42 and the shelf S are not moved. If the camera for article photographing 42 or the shelf S is moved, the processor 11 may return to ACT 31 and execute the processing again.

After acquiring the photographed image from the camera for article photographing 42, the processor 11 stores the photographed image acquired from the camera for article photographing 42 in the memory 12 as an image for preservation (a preservation image) (ACT 32). The preservation image stored in the memory 12 is an image photographed in the state in which the person is absent (a photographed image before person detection).

After storing the preservation image in the memory 12, the processor 11 acquires a monitoring video including the photographing region of the camera for article photographing 42 around the shelf S from the camera for store-interior photographing 43 in order to detect the person (ACT 33). The processor 11 acquires, from the camera for store-interior photographing 43, the monitoring video of the photographing region including a region where the person is accessible to articles disposed in the shelf S. For example, the region (a monitoring region) where the person is accessible to the articles disposed in the shelf S photographed by the camera for article photographing 42 is set in advance. The processor 11 acquires the monitoring video of the monitoring region from the camera for store-interior photographing 43. It is assumed that the processor 11 acquires, at every predetermined interval, the monitoring video of the monitoring region (the photographed image photographed by the camera for store-interior photographing 43) from the camera for store-interior photographing 43.

That is, the processor 11 detects the person from the monitoring video of the monitoring region acquired at every predetermined interval from the camera for store-interior photographing 43 (ACT 34). For example, the processor 11 detects the person from the monitoring video acquired from the camera for store-interior photographing 43 using the information for person detection saved in the memory 12. Even if the whole body of the person is not photographed in the photographed image acquired from the camera for article photographing 42, the processor 11 may determine that the person is detected if a part of the body of the person such as a hand or a foot is photographed. As a method of person detection, a person detecting method such as the linear separation of gradient information explained above can be used.

If the person is not detected in the monitoring video of the monitoring region acquired from the camera for store-interior photographing 43 (NO in ACT 34), the processor 11 returns to ACT 33 and acquires the monitoring video from the camera for store-interior photographing 43 at every predetermined interval.

If the person is detected in the monitoring video of the monitoring region acquired from the camera for store-interior photographing 43 (YES in ACT 43), the processor 11 performs person estimation processing for estimating person information of the detected person (ACT 35). The processor 11 performs the person estimation processing by, for example, estimating person information using linear separation of feature values. The processor 11 estimates whether the person detected by the image processing for the photographed image in the person estimation processing is a customer or a store clerk. The processor 11 may estimate, as the person information, information such as age or sex of the detected person.

After estimating the person information from the image in which the person is detected, the processor 11 saves the estimated person information (estimation information) in the memory 12 (ACT 36). The processor 11 may save the photographed image together with the estimated person information. The photographed image saved together with the person information may be an entire photographed image in which the person is photographed or may be an image of the region detected as the person. The processor 11 may save, as the person information, an entire image in which the person is photographed or the image of the region detected as the person. However, the photographed image in which the person is detected (the image including the person) may not be saved considering privacy.

If the person is detected, the processor 11 acquires the monitoring video of the monitoring region from the camera for store-interior photographing 43 until the person is no longer detected (ACT 37). For example, after once detecting the person, the processor 11 acquires the monitoring video of the monitoring region from the camera for store-interior photographing 43 at a predetermined interval (a second interval) until the person is no longer detected in the monitoring region. Every time a photographed image of the monitoring region photographed by the camera for store-interior photographing 43 is acquired, the processor 11 executes person detection processing on the acquired photographed image (Act 38).

If the person is continuously detected (YES in ACT 38), the processor 11 returns to ACT 35 and executes the person estimation processing. However, the processor 11 may omit, by tracking the person once detected, the processing in ACTS 35 and 36 for a person for whom the person estimation processing is already executed. That is, the processor 11 may execute the processing in ACTS 35 and 36 if another person is detected anew and may omit the processing in ACTS 35 and 36 in other cases.

If the person is no longer detected in the monitoring region (NO in ACT 38), the processor 11 photographs the shelf S with the camera for article photographing 42 (ACT 39). The processor 11 acquires a photographed image photographed by the camera for article photographing 42 in a state in which the person is not detected in the monitoring region set according to the camera for article photographing 42.

After acquiring the photographed image photographed after the person is no longer detected (after the person detection), the processor 11 performs difference detection processing for detecting a difference between the photographed image and the preservation image (ACT 40). The processor 11 acquires an image (a differential image) of a differential region between the preservation image, which is the photographed image before the person detection, saved in the memory 12 and the photographed image after the person detection photographed by the camera for article photographing 42. The processor 11 may acquire the differential region using a method of, for example, acquiring a part where a pixel change in a pixel level is equal to or larger than a threshold.

After executing the difference detection processing, the processor 11 executes, on the image of the differential region between the preservation image and the photographed image, article recognition processing for recognizing an article (ACT 41). For example, the processor 11 performs the article recognition processing using the information for article specifying saved in the memory 12. The processor 11 recognizes, with the article recognition processing for the image of the differential region, an article that fluctuates before and after the person detection.

After executing the article recognition processing, the processor 11 estimates fluctuation (a change in a disposition state) of the article in the shelf S based on a result of the article recognition for the image of the differential region (ACT 42). For example, the processor 11 may determine the fluctuation of the article with image processing for detecting a luminance change in an image region of the article in the shelf S, an area change of the image region of the article, and the like. The processor 11 can estimate a result of the person moving the article detected by the article recognition processing for the image of the differential region.

If the number of pieces of an article in the shelf S is smaller than a predetermined threshold, the processor 11 may display guidance for informing a shortage or the like of the article on the display 21 through the display I/F 14. If an image of the differential region indicating fluctuation of the article is not obtained (if there is no change before and after the person detection), the processor 11 may omit the processing in ACTS 41 to 45.

After estimating the fluctuation of the article, the processor 11 confirms whether the customer is present among persons detected in a period in which the fluctuation of the article is estimated (ACT 43). The processor 11 determines whether the customer is present among the detected persons based on the person information estimated by the person estimation processing for the image in which the person is detected.

In the processing example explained above, the processor 11 estimates whether the person detected in the person estimation processing in ACT 35 is the customer or the store clerk and saves a result of the estimation in the memory 12. In this case, the processor 11 confirms whether the customer is present among the persons based on the result of the person estimation processing saved in the memory 12.

However, if the photographed image in which the person is detected (or the image region of the detected person) is saved in the memory 12, the processor 11 may estimate whether the person is the customer or the store clerk from the image in which the person is detected. A method of estimating whether the person is the customer or the store clerk can be implemented by estimation processing using, for example, linear separation of feature values.

If the customer is present among the detected persons (YES in ACT 43), the processor 11 saves information indicating the estimated fluctuation of the article in the memory 12 as customer behavior information in association with the person information (ACT 44). That is, if the customer is detected, the processor 11 determines that the fluctuation of the article estimated in ACT 42 is fluctuation by the customer. In this case, the processor 11 saves, in the memory 12, the customer behavior information in which the information indicating the fluctuation of the article estimated in ACT 42 and the person information estimated in ACT 35 are associated.

For example, if the customer is present among the detected persons and the number of pieces of an article in the shelf S decreases, the processor 11 can estimate that the customer takes away the article decreasing in the number of pieces. If the customer is present among the detected persons and the number of pieces of an article in the shelf S increases, the processor 11 can estimate, based on a predetermined article disposition plan, whether disposition of the article is correct. Results of these estimations may be saved in the memory 12 as the customer behavior information. The information saved in the memory 12 may be displayed on the display 21 or the like in a form viewable by a user through the display I/F 14.

If the customer is absent among the detected persons (NO in ACT 43), the processor 11 saves, as store clerk behavior information, information indicating the estimated fluctuation of the article in the memory 12 in association with the person information (ACT 44). That is, if the customer is not detected, the processor 11 determines that the fluctuation of the article estimated in ACT 42 is fluctuation by the store clerk. In this case, the processor 11 saves, in the memory 12, the store clerk behavior information in which the information indicating the estimated fluctuation of the article and the person information estimated in ACT 35 are associated.

For example, if the customer is absent among the detected persons and if the number of pieces of an article in the shelf S decreases, the processor 11 can estimate that the store clerk moves the article decreasing in the number of pieces. If the customer is absent among the detected persons and the number of pieces of an article in the shelf S increases, the processor 11 can estimate, based on the predetermined article disposition plan, whether disposition of the article moved by the store clerk is correct. Results of these estimations may be saved in the memory 12 as the store clerk behavior information. The information saved in the memory 12 may be displayed on the display 21 or the like in a form viewable by the user through the display I/F 14.

After saving the customer behavior information or the store clerk behavior information in the memory 12, the processor 11 updates the photographed image for preservation (the preservation image) stored in the memory 12 (ACT 46). The processor 11 replaces the preservation image saved in the memory 12 with the photographed image photographed by the camera for article photographing 42 in a state in which the person is no longer detected. Consequently, the preservation image saved in the memory 12 before the person detection is overwritten by the photographed image photographed by the camera 2 after the person detection.

The processor 11 may store the photographed image after the person is no longer detected in the memory 12 as the latest preservation image without overwriting the photographed image on the preservation image saved in the memory 12. If the update of the preservation image ends, the processor 11 returns to ACT 33 and repeatedly executes the processing explained above.

As explained above, in the monitoring system according to the second embodiment, it is possible to detect a person accessible to the shelf using the person monitoring camera that photographs the store interior. It is possible to estimate person information of the detected person. The person monitoring camera is set for the purpose of detecting (monitoring) a person. Therefore, in the second embodiment, it is easy to accurately detect the person accessible to the shelf. An existing monitoring camera can be used as the person monitoring camera. Therefore, it is possible to reduce cost and labor and time for setting the monitoring system.

### (Third Embodiment)

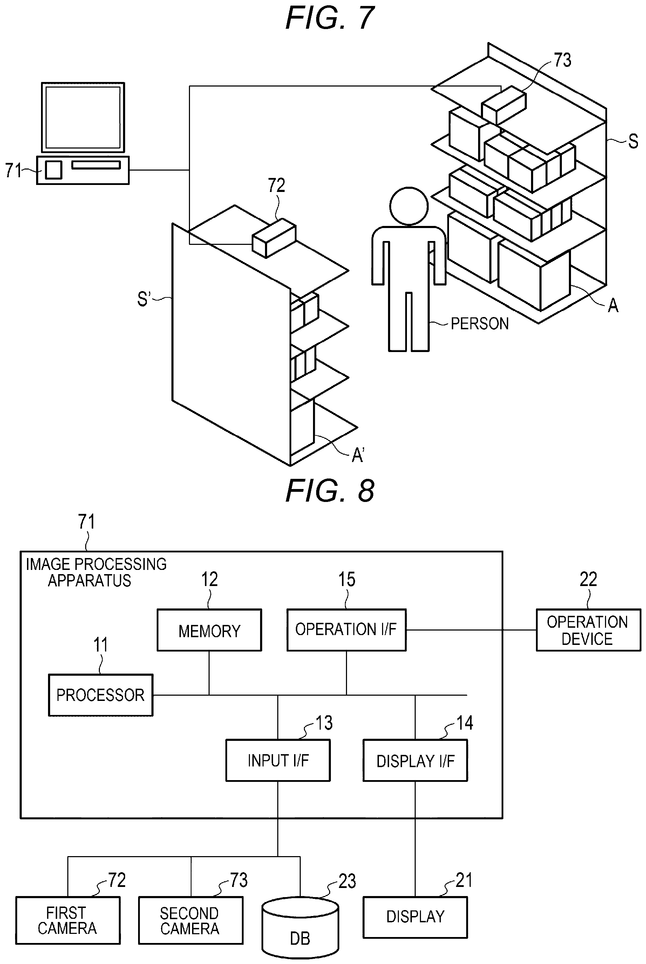

FIG. 7 is a diagram for schematically explaining a monitoring system including an image processing apparatus 71 according to a third embodiment.

As illustrated in FIG. 7, the monitoring system according to the third embodiment includes the image processing apparatus 71, a first camera 72, and a second camera 73. The image processing apparatus 71 is connected to the first camera 72 and the second camera 73.

The image processing apparatus 71 estimates a state of an article from a photographed image photographed by the first camera 72. The image processing apparatus 71 detects a person from an image photographed by the second camera 73. The image processing apparatus 71 has a function of performing person estimation processing for estimating person information of the person detected from the image photographed by the second camera 73.

In the third embodiment, the first camera 72 is set such that a photographing range of the first camera 72 is the shelf S in which the article A set as a monitoring target is disposed. For example, the first camera 72 is set to face the shelf S in which the article A is disposed. The second camera 73 is set to photograph, from the front, a person present to face the shelf S. For example, the second camera 73 is set such that a person accessible to the article A disposed in the shelf S from the shelf S side photographed by the first camera 72 is within a photographing range of the second camera 73.

In a configuration example illustrated in FIG. 7, the first camera 72 and the second camera 73 are respectively set in two shelves S and S' set to face each other. The first camera 72 is set such that the photographing range of the first camera 72 is the shelf S and a person accessible to an article A' in the shelf S' facing the shelf S is within a photographing region. The second camera 73 is set such that the photographing range of the second camera 73 is the shelf S' and a person accessible to the article A in the shelf S facing the shelf S' is within the photographing region.

For example, if the article A disposed in the shelf S is set as a monitoring target, the first camera 72 is a camera that photographs the article A and the second camera 73 is a camera that photographs the face of the person. If the article A' disposed in the shelf S' is set as a monitoring target, the second camera 73 is a camera that photographs the article A' and the first camera 72 is a camera that photographs the face of the person. The first camera 72 and the second camera 73 may be disposed in any positions such as a ceiling of the store, an inner part of a shelf, or the like if photographing regions of the first camera 72 and the second camera 73 are the photographing regions explained above.

The configuration of the image processing apparatus 71 according to the third embodiment is explained.

FIG. 8 is a block diagram illustrating a configuration example of a control system in the image processing apparatus 71 according to the third embodiment.

The image processing apparatus 71 according to the third embodiment has the same configuration as the image processing apparatus 1 illustrated in FIG. 2 explained in the first embodiment except that the first camera 72 and the second camera 73 are connected to the image processing apparatus 71. Therefore, concerning components of illustrated in FIG. 8, the same components as the components illustrated in FIG. 2 are denoted by the same reference numerals and signs and detailed explanation of the components is omitted.

That is, the image processing apparatus 71 according to the third embodiment is different from the configuration illustrated in FIG. 2 in that the first camera 72 and the second camera 73 are connected to the input I/F 13. However, in the image processing apparatus 71, an interface for connecting the first camera 72 and an interface for connecting the second camera 73 may be respectively provided. The processor 11 has a function of detecting a person or a face from a photographed image. The memory 12 retains information for face detection used for face detection processing.

The operation of the monitoring system including the image processing apparatus 71 according to the third embodiment is explained.

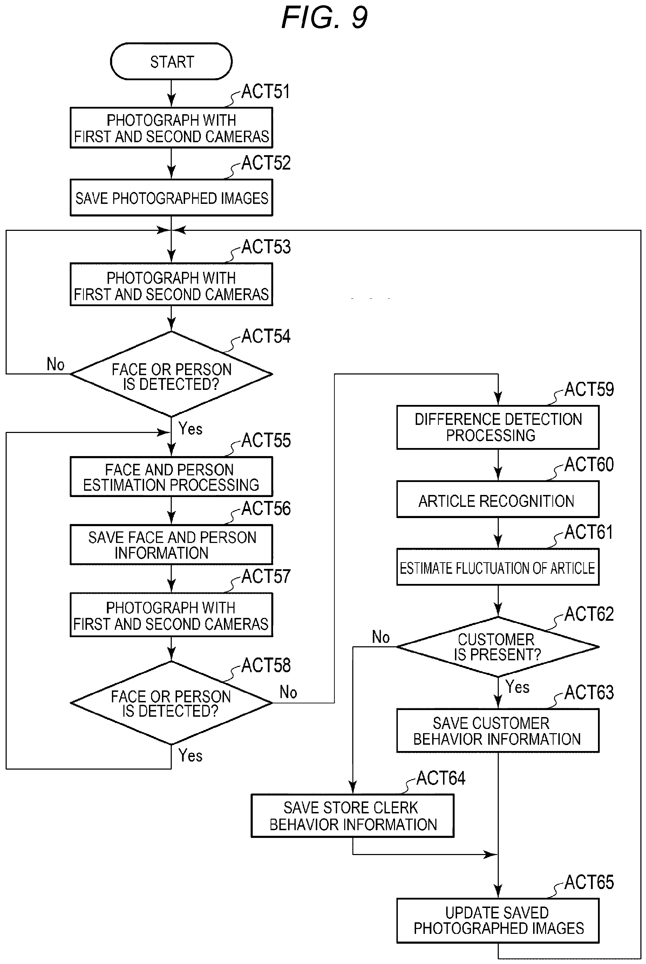

FIG. 9 is a flowchart for explaining an operation example of the image processing apparatus 71 according to the third embodiment.

First, the processor 11 of the image processing apparatus 71 photographs images respectively with the first camera 72 and the second camera 73 (ACT 51). It is assumed that the first camera 72 and the second camera 73 photograph images in a state in which the person is absent in the photographing region. The processor 11 stores, in the memory 12, a first photographed image (a first preservation image) photographed by the first camera 72 and a second photographed image (a second preservation image) photographed by the second camera 73 (ACT 52).

After storing the first and second preservation images in the memory 12, the processor 11 photographs, with the cameras 72 and 73, images for detecting the person (ACT 53). For example, the processor 11 performs the photographing by the cameras 72 and 73 at a predetermined interval (a first interval) in order to detect the person in the photographing ranges. The processor 11 acquires a first photographed image for person detection from the first camera 72 and acquires a second photographed image for person detection from the second camera 73. It is assumed that photographing positions of the cameras 72 and 73 and the positions of the shelves S and S' are not moved.

The processor 11 executes person detection processing and the face detection processing on the first and second photographed images for person detection acquired from the cameras 72 and 73 (ACT 54). The processor 11 executes the face detection processing for detecting the face of the person from the photographed images using face detection information stored by the memory 12. As a method for face detection, for example, it is possible to use a face detecting method such as a multistage filter by a Haar-like characteristic. The processor 11 executes the person detection processing for detecting the person from the photographed images using person detection information stored by the memory 12. As a method of person detection, it is possible to apply the method explained in the first embodiment.

If neither the face nor the person is detected from the photographed images of the first camera 72 and the second camera 73 (NO in ACT 54), the processor 11 returns to ACT 53 and repeats the photographing.

If the face or the person is detected from the photographed image of the second camera 72 or the second camera 73 (YES in ACT 54), the processor 11 performs face and person estimation processing for estimating face information of the detected face or person information of the detected person (ACT 55). For example, if the face is detected from the photographed image, the processor 11 estimates face information from an image of the detected face. The processor 11 estimates, as the face information, whether the person having the detected face is a customer or a store clerk. The processor 11 may estimate age, sex, or the like of the person as the face information from the image of the detected face. The face information may be the image of the face in the photographed image.

If the person is detected from the photographed image, the processor 11 estimates person information from an image of the detected person. The processor 11 estimates, as the person information, whether the detected person is the customer or the store clerk. The processor 11 may estimate age, sex, or the like of the person as the person information from the image of the detected person. The person information may be the photographed image or the image of the person in the photographed image.

After estimating the face information or the person information from the photographed image, the processor 11 saves the face information or the person information (estimation information) estimated from the photographed image in the memory 12 (ACT 56). The processor 11 may save the photographed image in the memory 12 together with the estimated face information or person information. As the face information or the person information, the entire photographed image or an image of a region detected as the face or the person may be saved. However, the photographed image in which the face or the person is detected may not be saved considering privacy.

If the face or the person is detected, the processor 11 executes the photographing by the first and second cameras 72 and 73 until the face or the person is no longer detected (ACT 57). For example, the processor 11 repeats the photographing by the cameras 72 and 73 at a predetermined interval (a second interval) until the person once detected is no longer detected. After acquiring photographed images photographed by the cameras 72 and 73, the processor 11 executes the face detection processing and the person detection processing on the photographed images photographed by the cameras 72 and 73 (ACT 58).

If the face or the person is continuously detected (YES in ACT 58), the processor 11 returns to ACT 55 and executes the face and person estimation processing. However, the processor 11 may omit, by tracking the person once detected, the processing in ACTS 55 and 56 for the person for whom the face and person estimation processing is already executed. In this case, the processor 11 executes the processing in ACTS 55 and 56 targeting a photographed image in which another face or another person is detected anew.

If the face or the person is no longer detected (NO in ACT 58), the processor 11 performs first difference detection processing and second difference detection processing for respectively detecting differences between first and second photographed images and first and second preservation images (ACT 59). The first difference detection processing is processing for acquiring an image of a first differential region (a first differential image) between the first preservation image and the first photographed image photographed by the first camera 72. The second differential detection processing is processing for acquiring an image of a second differential region (a second differential image) between the second preservation image and the second photographed image photographed by the second camera 73.

After executing the first difference detection processing and the second difference detection processing, the processor 11 executes article recognition processing for recognizing states of articles respectively for the images of the first and second differential regions (ACT 60). For example, the first differential image is an image showing fluctuation of an article in the shelf S photographed by the first camera 72. The processor 11 recognizes, with the article recognition processing for the first differential image, an article fluctuating in the shelf S before and after the detection of the face or the person. The processor 11 recognizes, with the article recognition processing for the second differential image, an article fluctuating in the shelf S' before and after the detection of the face or the person.

After executing the article recognition processing, the processor 11 estimates fluctuations of the articles (changes in the numbers of pieces of the articles, changes in disposition positions, and the like) in the shelf S and the shelf S' based on results of the article recognition for the first and second differential images (ACT 61). For example, the processor 11 may determine fluctuations of the articles with image processing for detecting luminance changes of image regions of the articles, area changes of the image regions of the articles, and the like.

If the number of pieces of the article in the shelf S or the shelf S' is smaller than a predetermined threshold, the processor 11 may display a shortage of the article on the display 21 through the display I/F 14. If an image of a differential region indicating fluctuate of the article is not obtained (if there is no change before and after the detection of the face or the person), the processor 11 may omit the processing in ACTS 60 to 64.

After estimating the fluctuations of the articles, the processor 11 confirms whether the customer is present among persons detected in a period in which the fluctuations of the articles are estimated (ACT 62). The processor 11 determines whether the customer is present among the detected persons based on the face information or the person information estimated by the face and person estimation processing for the image in which the face or the person is detected.

In the example explained above, the processor 11 estimates whether the face or the person detected by the person estimation processing in ACT 55 is the customer or the store clerk and saves a result of the estimation in the memory 12. In this case, the processor 11 confirms whether the customer is present among the detected persons based on the result of the face and person estimation processing saved in the memory 12. If the image in which the face or the person is detected is saved in the memory 12, the processor 11 only has to estimate whether the face or the person is the customer or the store clerk from the image saved in the memory 12.

If the customer is present among the detected persons (YES in ACT 62), the processor 11 saves information indicating the estimated fluctuations of the articles in the memory 12 as customer behavior information in association with the face information or the person information (ACT 63). If the customer is detected, the processor 11 estimates that the fluctuations of the articles estimated in Act 61 are fluctuations by the customer. In this case, the processor 11 saves, in the memory 12, the customer behavior information in which the information indicating the fluctuations of the articles estimated in ACT 61 and the face information or the person information estimated in ACT 55 are associated.

If the customer is absent among the detected persons (NO in ACT 62), the processor 11 saves information indicating the estimated fluctuations of the articles in the memory 12 as store clerk behavior information in association with the face information or the person information (ACT 64). If the customer is not detected, the processor 11 estimates that the fluctuations of the articles estimated in ACT 61 are fluctuations by the store clerk. In this case, the processor 11 saves, in the memory 12, the store clerk behavior information in which the information indicating the fluctuations of the articles estimated in ACT 61 and the face information or the person information estimated in ACT 55 are associated.

The customer behavior information or the store clerk behavior information saved in the memory 12 may be displayed on the display 21 or the like in a form viewable by the user through the display I/F 14.

After saving the customer behavior information or the store clerk behavior information in the memory 12, the processor 11 updates the photographed images for preservation (the preservation images) saved in the memory 12 (ACT 65). The processor 11 replaces the preservation images saved in the memory 12 with photographed images in a state in which the face and the person are no longer detected. Consequently, the first and second preservation images saved in the memory 12 before the person is detected are overwritten by the first and second photographed images photographed by the cameras 72 and 73 after the person detection.

The processor 11 may store the first and second photographed images after the person is no longer detected in the memory 12 as the latest first and second preservation images without overwriting the first and second photographed images on the first and second preservation images saved in the memory 12. If the update of the first and second preservation images ends, the processor 11 returns to ACT 53 and repeatedly executes the processing explained above.

In the processing example explained above, the information indicating whether the person is the customer or the store clerk from the face of the person and the information such as age and sex are explained as being specified as the face information. However, if a face image of the store clerk or the customer is registered in a memory or the like in advance, the image processing apparatus is also capable of specifying an individual with the face recognition processing for an image of a detected face. In this case, the image processing apparatus is also capable of saving, in the memory, information indicating fluctuation of an article estimated as behavior information of each of individuals.

As explained above, in the third embodiment, the two cameras are set to photograph the two shelves disposed to face each other. Consequently, one camera can photograph an article disposed in the shelf and the other camera can photograph the face of a person facing the shelf. Consequently, according to the third embodiment, it is possible to not only simply detect presence or absence of a person accessing an article disposed in the shelf but also detect the face of the person. As a result, it is possible to highly accurately estimate whether the person is the customer or the store clerk. It is possible to improve accuracy of the store clerk behavior information and the customer behavior information.

The several embodiments are explained above. However, the embodiments are presented as examples and are not intended to limit the scope of the invention. These new embodiments can be implemented in other various forms. Various omissions, substitutions, and changes can be made without departing from the scope of the invention. These embodiments and modifications of the embodiments are included in the scope and the gist of the invention and included in the inventions described in claims and the scope of equivalents of the inventions.

## Claims

1. An image processing apparatus, comprising:
an interface configured to acquire a photographed image from a camera that photographs a photographing region including a disposition position where an article is disposed;
a memory configured to store, as a preservation image, the photographed image photographed by the camera in a state in which the photographing region does not include a person; and
a processor configured to estimate fluctuation of the article based on article recognition processing for an image of a differential region between a photographed image photographed by the camera after the person detected in the photographing region is no longer detected in the photographing region and the preservation image stored by the memory.

2. The apparatus according to claim 1, wherein the processor detects the person from the photographed image of the photographing region photographed by the camera to remove the person from the photographing region.

3. The apparatus according to claim 1 or 2, wherein
the interface further acquires a monitoring video from a person monitoring camera that photographs a monitoring region including the photographing region, and
the processor detects the person in the photographing region of the camera from the monitoring video.

4. The apparatus according to claim 2, wherein
the interface further acquires a photographed image from a second camera that photographs a region including the photographing region from a disposition position side of the article, and
the processor further detects a face of the person in the photographing region from the photographed image of the camera or the photographed image of the second camera and estimates the fluctuation of the article based on article recognition processing for an image of a differential region between a photographed image photographed by the camera after a face or the person detected in the photographing region is no longer detected in the photographing region and the preservation image stored by the memory.

5. The apparatus according to any one of claims 1 to 4, wherein the processor estimates whether the person detected in the photographing region is a customer or a store clerk and, if the person is estimated as the customer, saves an estimation result of the fluctuation of the article as customer behavior information and, if the person is estimated as the store clerk, saves an estimation result of fluctuation in a number of pieces of the article as store clerk behavior information.

6. The apparatus according to any one of claims 1 to 5, wherein when the processor estimates the fluctuation of the article results in a number of articles smaller than a threshold number, the processor sends a notice of a shortage of the article.

7. The apparatus according to any one of claims 1 to 6, wherein the processor is further configured to associate a specific article with a customer, the customer being the person detected in the photographing region, and save the association as customer behavior information in the memory.

8. An image processing method, comprising:
acquiring a photographed image from a camera that photographs a photographing region including a disposition position where an article is disposed;
storing, as a preservation image, the photographed image photographed by the camera in a state in which the photographing region does not include a person; and
estimating fluctuation of the article based on article recognition processing for an image of a differential region between a photographed image photographed by the camera after the person detected in the photographing region is no longer detected in the photographing region and the preservation image stored.

9. The method according to claim 8, further comprising:
detecting the person from the photographed image of the photographing region photographed by the camera and removing the person from the photographing region.

10. The method according to claim 8 or 9, further comprising:
acquiring a monitoring video from a person monitoring camera that photographs a monitoring region including the photographing region, and
detecting the person in the photographing region of the camera from the monitoring video.

11. The method according to claim 9, further comprising:
acquiring a photographed image from a second camera that photographs a region including the photographing region from a disposition position side of the article; and
detecting a face of the person in the photographing region from the photographed image of the camera or the photographed image of the second camera; and
estimating the fluctuation of the article based on article recognition processing for an image of a differential region between a photographed image photographed by the camera after a face or the person detected in the photographing region is no longer detected in the photographing region and the preservation image stored.

12. The method according to any one of claims 8 to 11, further comprising:
estimating whether the person detected in the photographing region is a customer or a store clerk; and
if the person is estimated as the customer, saving an estimation result of the fluctuation of the article as customer behavior information, and
if the person is estimated as the store clerk, saving an estimation result of fluctuation in a number of pieces of the article as store clerk behavior information.

13. The method according to any one of claims 8 to 12, further comprising:
when the fluctuation of the article results in a number of articles smaller than a threshold number, sending a notice of a shortage of the article.

14. The method according to any one of claims 8 to 13, further comprising:
associating a specific article with a customer, the customer being the person detected in the photographing region; and
saving the association as customer behavior information.

15. An inventory monitoring system, comprising:
the image processing apparatus according to any one of claims 1 to 7; and
a threshold number of the articles.
